# EUROPEAN PATENT APPLICATION

(11) **EP 4 660 259 A2**
(43) Date of publication of application: **10.12.2025**
(21) Application number: 25212137.1
(22) Date of filing: 21.07.2020
(51) Int. Cl.: C09D 5/34

(54) **A FILLER COMPOUND AND USE OF A FILLER COMPOUND**

(62) Divisional of application: 20305837.5
(71) Applicant: Saint-Gobain Placo, 92400 Courbevoie (FR)
(72) Inventor: ADAM, Robert, 92400 Courbevoie (FR); RIDDLE, Carl, 92400 Courbevoie (FR)
(74) Representative: Murgitroyd & Company

(57) **Abstract**

According to the present invention, there is provided a filler compound, the filler compound comprising filler particles and a binder, wherein the filler particles comprise particles of at least one glassy material, and the particles of glassy material are at least 10 wt.% of the dry mass of the filler compound, and wherein at least 30 wt.% of the filler particles have a diameter between 50 and 100 microns inclusive. Use of a filler compound in the erection of a structure is also described.

## Description

### Field of the Invention

The present invention relates to a filler compound. The present invention also relates to the use of a filler compound in the erection of a structure.

### Background of the Invention

Gypsum wallboard, also known as plasterboard, is commonly used during the construction of structures such as partition walls and/or ceilings. Walls made from plasterboard are conventionally constructed by affixing plasterboard panels to studs or joists. While experienced construction workers can minimise the gap between adjacent plasterboards, eliminating the gaps between boards is impossible, especially in areas where the prefabricated boards need to be cut or trimmed. In addition to plasterboard, structures can also be constructed using other construction boards such as, but not limited to, cement boards, concrete boards, non-gypsum based boards and fibreboards.

A filler or joint compound can be used to fill the gap between adjacent construction boards. Additionally, a filler can also be used to repair damaged areas of construction boards, and to fill in holes, recesses or voids to ensure a smooth finish. When a filler compound is used, the filler compound is inserted into the gap between adjacent construction boards, or into damaged areas, or into holes, recesses or voids to improve the continuity of the surface. Various forms of filler compound are known. One type of filler compound is a dry powder, which is mixed with water to form a paste before being inserted into the gap between adjacent construction boards. The second type of filler compound is provided to the user as a premixed paste. In either event, the filler compound must be allowed to set and dry within the gap between adjacent construction boards, or into damaged areas, or into holes, recesses or voids before further work can be undertaken to improve the aesthetics of the filler.

The appearance of the filler may be unacceptable due to cracking of the filler compound during the setting process. This cracking occurs as water and/or other fluids evaporate from the filler compound as it dries and sets, with this evaporation leading to shrinkage of the filler compound. Therefore, to improve the appearance of the filler, finishing layers of plaster are used to smooth the surface of the structure.

The application of finishing layers of plaster is a time consuming process. Where the filler compound has cracked badly, often where the gap between adjacent boards is large, several layers of finishing plaster may be required to provide an acceptable finish. In such circumstances, each layer of finishing plaster must be allowed to dry before a subsequent layer is added, dramatically increasing the length of time taken to build a given structure. Additionally, plasterers are skilled workers and, therefore, applying several layers of finishing plaster can be a significant expense.

Objects and aspects of the present invention seek to address at least some of these points

### Summary of the Invention

According to a first aspect of the present invention, there is provided a filler compound, the filler compound comprising filler particles and a binder, wherein the filler particles comprise particles of at least one glassy material, and further wherein the particles of glassy material are at least 10 wt.% of the dry mass of the filler compound, and finally wherein at least 30 wt.% of the filler particles have a diameter between 50 and 100 microns inclusive.

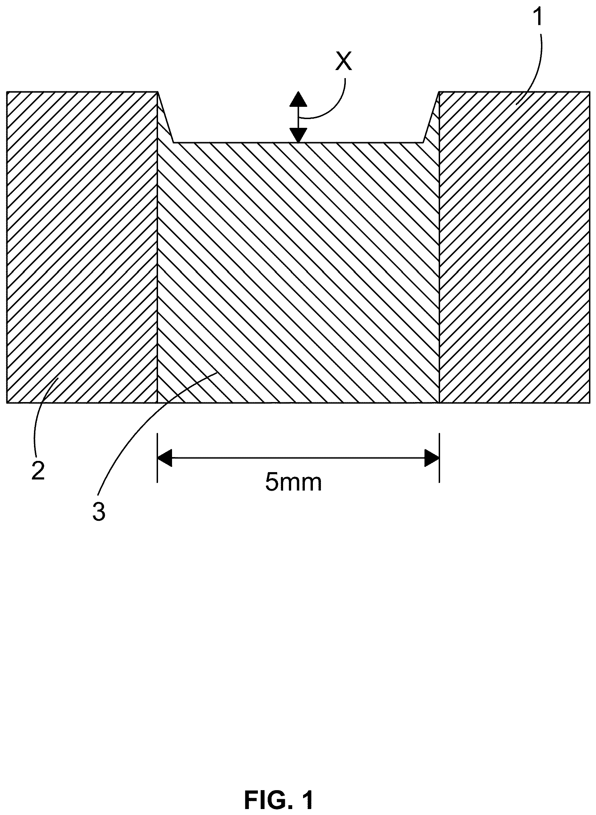

In this way, a filler compound with low shrinkage properties may be provided. A low shrinkage filler compound may be considered to be a filler compound that exhibits a measured depth of shrinkage of at most 0.5 mm when measured as described in relation to Figure 1 and Table 2.

Preferably, the filler compound is a paste. Alternatively, the filler compound is a powder. Where the filler compound is a powder, it may be combined with water or another suitable fluid before use. As such, the powder may be hydratable. Preferably the powder further comprises stucco (CaSO₄(1/2)H₂O). Preferably, the powder comprises calcium sulphate anhydrite (CaSO₄). Preferably, the powder comprises both stucco and calcium sulphate anhydrite.

Preferably, the filler compound is a joint filler compound. Joint filler compounds are those used to fill gaps between construction panels during the erection of a structure, The features described herein related to a filler compound can also be features of a joint filler compound. Additionally, any described advantages of these features in relation to a filler compound may also be relevant when providing a joint filler compound.

Preferably, the at least one glassy material comprises expanded perlite, obsidian, pitchstone, pumice, plagioclase, tachylite, scoria, hyalocalstite, sideromelane, microspheres and/or cenospheres. Preferably, the glassy material consists of one of expanded perlite, obsidian, pitchstone, pumice, plagioclase, tachylite, scoria, hyalocalstite, sideromelane, microspheres and/or cenospheres. Glassy materials include glassy igneous rocks as well as the silicic volcanic glasses. Glassy microspheres include those comprising borosilicate glass.

A microsphere is a small, spherical micro particle. Cenospheres are lightweight, inert, hollow spheres. Preferably, a cenosphere comprises silica and alumina.

Preferably, at least 30 wt.% of the filler particles have a diameter between 63 and 100 microns inclusive. More preferably, at least 40 wt.% of the filler particles have a diameter between 63 and 100 microns inclusive. Still more preferably, at least 45 wt.% of the filler particles have a diameter between 63 and 100 microns inclusive.

Preferably, at most 80 wt.% of the filler particles have a diameter between 63 and 100 microns inclusive. More preferably, at most 75 wt.% of the filler particles have a diameter between 63 and 100 microns inclusive. Still more preferably, at most 60 wt.% of the filler particles have a diameter between 63 and 100 microns inclusive. Still more preferably, at most 55 wt.% of the filler particles have a diameter between 63 and 100 microns inclusive.

Preferably, at least 35 wt.% of the filler particles have a diameter between 50 and 100 microns inclusive. More preferably, at least 40 wt.% of the filler particles have a diameter between 50 and 100 microns inclusive. Still more preferably, at least 45 wt.% of the filler particles have a diameter between 50 and 100 microns inclusive.

Preferably, at most 80 wt.% of the filler particles have a diameter between 50 and 100 microns inclusive. More preferably, at most 75 wt.% of the filler particles have a diameter between 50 and 100 microns inclusive. Still more preferably, at most 60 wt.% of the filler particles have a diameter between 50 and 100 microns inclusive. Still more preferably, at most 55 wt.% of the filler particles have a diameter between 50 and 100 microns inclusive.

Preferably, the particles of glassy material are at least 15 wt.% of the dry mass of the filler compound. More preferably, the particles of glassy material are at least 20 wt.% of the dry mass of the filler compound. Still more preferably, the particles of glassy material are at least 20 wt.% of the dry mass of the filler compound.

Preferably, the particles of at least one glassy material comprise particles of pumice. Generally, pumice comprises primarily silicon dioxide with aluminium oxide and trace amounts of other oxides. Still more preferably, the particles of at least one glassy material consist of particles of pumice.

Preferably, the particles of pumice are at least 10 wt.% of the dry mass of the filler compound. More preferably, the particles of pumice are at least 15 wt.% of the dry mass of the filler compound. Still more preferably, the particles of pumice are at least 20 wt.% of the dry mass of the filler compound.

Preferably, at least 95 wt.% of the filler particles have a diameter below 200 microns. More preferably, at least 95 wt.% of the filler particles have a diameter below 125 microns. Such a feature is advantageous as it may improve the surface finish and smoothness of the filler compound.

Preferably, the binder comprises a stucco binder. More preferably, the stucco binder may be present in an amount of between 50 and 30 wt.% of the dry mass of the filler compound. Still more preferably, the stucco binder may be present in an amount of between 35 and 45 wt.% of the dry mass of the filler compound. Most preferably, the stucco binder is present in an amount of 40 wt.% of the dry mass of the filler compound. Preferably, the binder may comprise a polymer binder. The binder may comprise both a stucco binder and a polymer binder. Preferably, the polymer binder is present in an amount of 1.0 wt.% to 6.0 wt.% of the dry mass of the filler compound. More preferably, the polymer binder is present in an amount of 1.5 wt.% of the dry mass of the filler compound.

Preferably, 20 wt.% to 80 wt.% inclusive of the filler has a bulk density of between 200-2000 g/l. More preferably, 20 wt.% to 80 wt.% inclusive of the filler has a bulk density of between 200-1000 g/l.

Preferably, the particles of at least one glassy material comprise particles of expanded perlite. Perlite is an amorphous volcanic glass with a typical chemical composition of (all percentages by weight):
- 70 to 75% silicone dioxide
- 12 to 15% aluminium oxide
- 3 to 4 % sodium oxide
- 3 to 5 % potassium oxide
- 0.5 to 2% iron oxide
- 0.2 to 0.7% magnesium oxide
- 0.5 to 1.5% calcium oxide.

Expanded perlite is typically formed by heating perlite. Perlite is unusual in that when it is heated it can expand to as much as twenty times its original volume, creating a low density material.

Preferably, the particles of expanded perlite are at least 10 wt.% of the dry mass of the filler compound. More preferably, the particles of expanded perlite are at least 15 wt.% of the dry mass of the filler compound. Still more preferably, the particles of expanded perlite are at least 20 wt.% of the dry mass of the filler compound.

Preferably, the filler particles further comprise particles of calcium carbonate. Preferably, the particles of calcium carbonate are at least 5 wt.% of the dry mass of the filler compound. More preferably, the particles of calcium carbonate are at least 10 wt.% of the dry mass of the filler compound. Still more preferably, the particles of calcium carbonate are at least 20 wt.% of the dry mass of the filler compound.

Preferably, the filler compound further comprises a thickener. More preferably the thickener comprises at least one of starch ether, polyacrylamide, clay, hectorite, bentonite, palygorskite (attapulgite), xanthan gum and/or a polyurethane.

Preferably, the filler compound further comprises a retarder. Preferably, the retarder comprises an organic acid. Preferably, the retarder is present in an amount of 0.02 wt.% of the dry mass of the filler compound.

Preferably, the filler compound comprises an adhesive. Preferably, the adhesive comprises a vinyl acetate polymer and/or a styrene polymer. Preferably, the filler compound further comprises at last one of a biocide, fungicide and an antibacterial agent.

Preferably, the filler compound comprises cellulose ether. More preferably, the cellulose ether is present in an amount of 0.35 wt.% of the dry mass of the filler compound. Preferably, the filler compound comprises starch ether. More preferably, the starch ether is present in an amount of 0.02 wt.% of the dry mass of the filler compound.

According to a second aspect of the present invention there is provided use of the filler compound previously described in the erection of a structure. Preferably, the structure comprises a partition wall or ceiling. Preferably, the structure comprises a plasterboard, cement board, concrete board, non-gypsum based board and/or a fibreboard. Preferably, the erection of the structure comprises a dry lining process.

### Detailed Description

To seek an improved filler compound, a selection of different filler compounds with various compositions were prepared. Each filler compound was prepared as a dry powder. The filler compounds prepared are described in Table 1 below.

| **Filler Compound** | **Binder** | **Filler** | **Organics** |
|---|---|---|---|
| Example 1 | 40 wt.% CaSO₄(1/2)H₂O | 58 wt.% Pumice (75% of particles between 63 and 100 µm diameter) | 2 wt.% |
| Example 2 | 40 wt.% CaSO₄(1/2)H₂O | 58 wt.% Expanded Perlite (80% of particles between 63 and 100 µm diameter) | 2 wt.% |
| Example 3 | 40 wt.% CaSO₄(1/2)H₂O | 58 wt.% Expanded Perlite (40% of particles between 63 and 100 µm diameter, 40% of particles between 100 and 180 µm diameter) | 2 wt.% |
| Example 4 | 40 wt.% CaSO₄(1/2)H₂O | 58 wt.% Expanded Perlite (60% of particles between 63 and 100 µm diameter) | 2 wt.% |
| Example 5 | 40 wt.% CaSO₄(1/2)H₂O | 58 wt.% Cenospheres (80% of particles between 63 and 100 µm diameter) | 2 wt.% |
| Comparative Example 1 | 40 wt.% CaSO₄(1/2)H₂O | 58 wt.% Pumice (80% of particles between 0 and 32 µm diameter) | 2 wt.% |
| Comparative Example 2 | 40 wt.% CaSO₄(1/2)H₂O | 58 wt.% Calcium Carbonate (80% of particles between 32 and 63 µm diameter) | 2 wt.% |
| Comparative Example 3 | 40 wt.% CaSO₄(1/2)H₂O | 58 wt.% Calcium Carbonate (100% of particles between 0 and 32 µm diameter) | 2 wt.% |
| Comparative Example 4 | 40 wt.% CaSO₄(1/2)H₂O | 8 wt.% Calcium Carbonate (100% of particles between 0 and 32 µm diameter) and 50 wt.% Calcium Carbonate (100% of particles between 63 and 100 µm diameter) | 2 wt.% |
| Comparative Example 5 | 40 wt.% CaSO₄(1/2)H₂O | 8 wt.% Calcium Carbonate (100% of particles between 0 and 32 µm diameter) and 50 wt.% Calcium Magnesium Carbonate (100% of particles between 63 and 100 µm diameter) | 2 wt.% |
| Comparative Example 6 | 40 wt.% CaSO₄(1/2)H₂O | 58 wt.% Calcium Carbonate (50% of particles between 0 and 32 µm diameter and 50 % of particles between 32 and 63 µm diameter) | 2 wt.% |
| Comparative Example 7 | 40 wt.% CaSO₄(1/2)H₂O | 58 wt.% Mica (50% of particles between 0 and 32 µm diameter and 50 % of particles between 32 and 63 µm diameter) | 2 wt.% |
| Comparative Example 8 | 40 wt.% CaSO₄(1/2)H₂O | 58 wt.% Bentonite (50% of particles between 0 and 32 µm diameter and 50 % of particles between 32 and 63 µm diameter) | 2 wt.% |

To investigate the shrinkage properties of each prepared filler compound, 12.5 mm thick plasterboards 1, 2 were installed with a 5 mm gap between them. The prepared filler compounds were subsequently used to fill the gap between the plasterboards 3, with the filler compounds allowed to dry for 24 hours. After drying, the filler between the plasterboards was measured using callipers to measure the depth of shrinkage (X) of the filler compound within the filler as seen in Figure 1. The measured depth of shrinkage for each filler compound was then categorised with a value of 0 to 3 as outlined below in Table 2.

| **Measured Depth of Shrinkage (X)** | **Shrinkage Value** |
|---|---|
| X < 0.1 mm | 0 |
| 0.1 mm ≤ X ≤ 0.5 mm | 1 |
| 0.5 mm < X ≤ 1.0 mm | 2 |
| 1.0 mm < X | 3 |

Analysis of the each prepared filler compound produced the following results shown in Table 3.

| **Filler Compound** | **Shrinkage Value** |
|---|---|
| Example 1 | 0 |
| Example 2 | 1 |
| Example 3 | 1 |
| Example 4 | 1 |
| Example 5 | 1 |
| Comparative Example 1 | 2 |
| Comparative Example 2 | 2 |
| Comparative Example 3 | 3 |
| Comparative Example 4 | 2 |
| Comparative Example 5 | 2 |
| Comparative Example 6 | 3 |
| Comparative Example 7 | 3 |
| Comparative Example 8 | 3 |

Examples 1 to 5 show improved performance compared to the comparative examples, with improved performance being a reduction in observed shrinkage. Example 1 showed a shrinkage of less than 0.1 mm, and all of Examples 1 to 5 showed shrinkage of 0.5 mm or lower. Conversely, all of Comparative Examples 1 to 8 showed shrinkage of greater than 0.5 mm. A shrinkage value of greater than 0.5 mm is frequently undesirable, as such shrinkage values can lead to the filler having poor aesthetics.

To investigate the quantity of particles of glassy material required to ensure the filler compound has the desired low shrinkage properties, further experiments were undertaken. The filler compound compositions used in these experiments are detailed below.

**Table 4 - Stucco Based Powder Compounds**

| **Filler Compound** | **Binder** | **Filler** | | **wt.% of Filler Particles With a Diameter between 50 and 100 Microns Inclusive** | **Organics** |
|---|---|---|---|---|---|
| Example 6 | 40 wt.% CaSO₄(1/2)H₂O | 26.6 wt.% Calcium Carbonate | 30 wt.% Pumice (75% of particles between 63 and 100 µm diameter) | 41 | 3.4 wt.% |
| Example 7 | 40 wt.% CaSO₄(1/2)H₂O | 6.6 wt.% Calcium Carbonate | 50 wt.% Pumice (60% of particles between 63 and 100 µm diameter) | 50 | 3.4 wt.% |
| Example 8 | 40 wt.% CaSO₄(1/2)H₂O | 26.6 wt.% Calcium Carbonate | 30 wt.% Pumice (65% of particles between 63 and 100 µm diameter) | 43 | 3.4 wt.% |
| Example 9 | 40 wt.% CaSO₄(1/2)H₂O | 26.6 wt.% Calcium Carbonate | 20 wt.% Pumice (75% of particles between 63 and 100 µm diameter) and 10 wt.% microspheres. | 35 | 3.4 wt.% |

**Table 5 - Polymer Based Powder Compounds**

| **Filler Compound** | **Binder** | **Filler** | | **wt.% of Filler Particles With a Diameter between 50 and 100 Microns Inclusive** | **Organics (Including Polymer Binder)** |
|---|---|---|---|---|---|
| Example 10 | Polymer Binder (vinyl acetate) | 76.6 wt.% Calcium Carbonate | 20 wt.% Pumice (75% of particles between 63 and 100 µm diameter) | 36 | 3.4 wt.% |
| Example 11 | Polymer Binder (vinyl acetate) | 52.6 wt.% Calcium Carbonate | 45 wt.% Pumice (60% of particles between 63 and 100 µm diameter) | 47 | 3.4 wt.% |
| Example 12 | Polymer Binder(vinyl acetate) | 71.6 wt.% Calcium Carbonate | 25 wt.% Pumice (65% of particles between 63 and 100 µm diameter) | 38 | 3.4 wt.% |
| Example 13 | Polymer Binder (vinyl acetate) | 66.6 wt.% Calcium Carbonate | 20 wt.% Pumice (75% of particles between 63 and 100 µm diameter) and 10 wt.% microspheres. | 36 | 3.4 wt.% |

**Table 6 - Polymer Based Paste Compounds**

| **Filler Compound** | **Binder** | **Filler** | | **wt.% of Filler Particles With a Diameter between 50 and 100 Microns Inclusive** | **Organics (Including Polymer Binder)** |
|---|---|---|---|---|---|
| Example 14 | Polymer Binder(vinyl acetate) | 76.6 wt.% Calcium Carbonate | 20 wt.% Pumice (75% of particles between 63 and 100 µm diameter) | 34 | 3.4 wt.% |
| Example 15 | Polymer Binder (vinyl acetate) | 56.6 wt.% Calcium Carbonate | 40 wt.% Pumice (60% of particles between 63 and 100 µm diameter) | 47 | 3.4 wt.% |
| Example 16 | Polymer Binder (vinyl acetate) | 71.6 wt.% Calcium Carbonate | 25 wt.% Pumice (65% of particles between 63 and 100 µm diameter) | 37 | 3.4 wt.% |
| Example 17 | Polymer Binder (vinyl acetate) | 66.6 wt.% Calcium Carbonate | 20 wt.% Pumice (75% of particles between 63 and 100 µm diameter) and 10 wt.% microspheres. | 38 | 3.4 wt.% |

In each case, the weight percentages were measured as the dry mass of the filler compound. Additionally, the weight percentage of filler particles with a diameter between 50 and 100 microns inclusive was measured using a wet sieving method as is well known by the skilled person.

Again, the measured depth of shrinkage was determined as previously described in relation to Figure 1 and categorised as outlined in Table 2. The results for Examples 6 to 17 are included below in Table 7, each result averaged across five separate experimental trials and rounded to one decimal place.

**Table 7 - Shrinkage Values**

| **Filler Compound** | **Shrinkage Value** |
|---|---|
| Example 6 | 1 |
| Example 7 | 1 |
| Example 8 | 1 |
| Example 9 | 1 |
| Example 10 | 1 |
| Example 11 | 1 |
| Example 12 | 1 |
| Example 13 | 1 |
| Example 14 | 1 |
| Example 15 | 1 |
| Example 16 | 1 |
| Example 17 | 1 |

As can be seen from Table 7, each of Examples 6 to 17 produced a shrinkage value of 1. As such, all of Examples 6 to 17 showed a measured depth of shrinkage of 0.5 mm or lower. A measured depth of shrinkage of 0.5 mm or lower is desirable as previously outlined.

The experimental data provided in relation to Examples 1 to 17 illustrates a number of features. Firstly, it supports that particles of a number of different glassy materials produce the desired low shrinkage effect, and that this effect is not limited to a single material. Successful results have been demonstrated with the use of cenospheres, microspheres, pumice and expanded perlite.

Additionally, the experimental data illustrates that the inclusion of calcium carbonate within the filler compounds does not have a negative effect on its low shrinkage properties. Calcium carbonate has been successfully included in the low shrinkage filler compounds without any notable reduction in efficacy.

Further, the experimental data has illustrated that successful results are obtained with a variety of values of the weight percentage of filler particles with a diameter between 50 and 100 microns inclusive. Finally, the experimental data has also shown that a range of weight percentages of the particles of glassy material can be used to achieve the desired low shrinkage filler compound.

Finally, experiments were conducted to illustrate the performance of previously presented and described example filler compounds with prior art filler compounds. The filler compounds used in these experiments are detailed below in Table 8.

**Table 8 - Comparison with Existing Products**

| **Filler Compound** | **Binder** | **Filler** | **Shrinkage** |
|---|---|---|---|
| Comparative Example 9 (GYPROC Jointfiller Super) | CaSO₄(1/2)H₂O | Calcium Carbonate and Dolomite | 8 % |
| Comparative Example 10 (GYPROC Jointfiller Vario) | CaSO₄(1/2)H₂O | Calcium Carbonate | 5% |
| Example 1 | CaSO₄(1/2)H₂O | Pumice and Calcium carbonate | 1 % |
| Comparative Example 11 (RIGIPS Profin) | Polyvinylacetate | Calcium Carbonate and Dolomite | 25 % |
| Comparative Example 12 (GYPROC Jointfinisher Premium) | Polyvinylacetate | Calcium Carbonate | 22 % |
| Example 11 | Polyvinylacetate | Pumice and Calcium Carbonate | 3% |
| Comparative Example 13 (RIGIPS ProMix Mega) | Polyvinylacetate | Calcium Carbonate | 25% |
| Comparative Example 14 (DALAPRO Medium) | Polyvinylacetate | Calcium Carbonate and Perlite | 17 % |
| Example 15 | Polyvinylacetate | Pumice and Calcium Carbonate | 3% |

To measure the percentage shrinkage a plasterboard substrate was provided and circular moulds of 3mm depth and 50 mm placed on the surface of the plasterboard. Subsequently, a filler compound was used to fill each mould, with the filler compound flattened such that it filled the mould completely with a flat top surface. Therefore, each filler compound formed a cylinder of 3mm in height and 50mm in diameter. Each filler compound was then allowed to dry and set for 24 hours, before the difference in height between the upper surface of the set filler compound and the top of the mould was measured using a laser. The change in volume in the filler compound before and after setting was then calculated, and this change in volume expressed as a percentage shrinkage as is well known to the skilled person. This method of measurement is well known in the art and has an established standard deviation of ±1%.

As can be seen from Table 8, the filler compositions within the scope of the present invention each have a much lower shrinkage value than the prior art compositions against which they were measured. This reduction in shrinkage value held true for both compounds where stucco was the binder and for compounds which used a polyvinylacetate binder. Compounds using a stucco binder showed the least shrinkage overall, although each of the binders according to the present invention showed better shrinkage performance than any of the prior art products.

## Claims

1. A filler compound,
said filler compound comprising filler particles and a binder,
wherein said filler particles comprise particles of at least one glassy material,
wherein said particles of glassy material are at least 10 wt.% of the dry mass of said filler compound, and
wherein at least 30 wt.% of said filler particles have a diameter between 50 and 100 microns inclusive.

2. The filler compound of claim 1, wherein said particles of at least one glassy material comprise particles of pumice.

3. The filler compound of claim 2, wherein said particles of pumice are at least 10 wt.% of the dry mass of said filler compound.

4. The filler compound of claim 3, wherein said particles of pumice are at least 20 wt.% of the dry mass of said filler compound.

5. The filler compound of any one preceding claim, wherein at least 95 wt.% of said filler particles have a diameter below 200 microns, preferably, below 125 microns.

6. The filler compound of any one of any one preceding claim, wherein said binder comprises a stucco binder.

7. The filler compound of any one of any one preceding claim, wherein said binder comprises a polymer binder.

8. The filler compound of any one preceding claim, wherein 20 wt.% to 80 wt.% inclusive of said filler has a bulk density of between 200-2000 g/l.

9. The filler compound of any one preceding claim, wherein said particles of at least one glassy material comprise particles of expanded perlite.

10. The filler compound of claim 9, wherein said particles of expanded perlite are at least 10 wt.% of the dry mass of said filler compound.

11. The filler compound of any one preceding claim, wherein said filler particles further comprise particles of calcium carbonate.

12. The filler compound of claim 11, wherein said particles of calcium carbonate are at least 5 wt.% of the dry mass of said filler compound.

13. The filler compound of any one preceding claim, wherein said filler compound further comprises a thickener.

14. The filler compound of any one preceding claim, wherein said filler compound further comprises a retarder.

15. Use of the filler compound described in any one preceding claim in the erection of a structure.
